# FASCICULE DE BREVET EUROPEEN

(11) **EP 0 568 402 B1**
(45) Date de publication et mention de la délivrance du brevet: **27.01.1999**
(21) Numéro de dépôt: 93400844.2
(22) Date de dépôt: 01.04.1993
(51) Int. Cl.: H04L 12/28, H04L 12/64

(54) **Réseau de télécommunications**
Fernmeldenetz
Telecommunications network

(30) Priorité: 03.04.1992 FR 9204080
(43) Date de publication de la demande: 03.11.1993
(73) Titulaire: FRANCE TELECOM, 75015 Paris (FR)
(72) Inventeur: Guignard, Philippe, F-22560 Pleumeur Bodou (FR); Hamel, André, F-22300 Lannion (FR)
(74) Mandataire: Signore, Robert

(56) Documents cités:
- EP-A- 0 261 790
- EP-A- 0 364 638
- EP-A- 0 407 078
- US-A- 4 817 087

## Description

### Domaine technique

La présente invention a pour objet un réseau de télécommunications. On désigne par là un ensemble de stations connectées à un même support physique et échangeant des informations.

### Etat de la technique antérieure

On connaît des réseaux de télécommunications de caractère optique, utilisant des faisceaux optiques à plusieurs longueurs d'onde. Ces réseaux seront qualifiés par la suite de "multicolores".

Les réseaux multicolores permettent d'augmenter considérablement la capacité d'un réseau. Chaque longueur d'onde peut en effet véhiculer des débits de plusieurs Gbit/s. Un exemple de réseau multicolore est le réseau à large bande LAMBDANET (Marque déposée) de la Société américaine BELLCORE. Ce réseau comprend diverses sources optiques regroupées sur un coupleur optique. Toutes les longueurs d'ondes sont diffusées simultanément à chaque station, laquelle comprend un démultiplexeur fixe et un récepteur par longueur d'onde. Un tel réseau ne convient pas pour un grand nombre de stations. Cela conduirait en effet à un trop grand nombre d'émetteurs et de récepteurs.

Plus récemment, la Société américaine IBM a présenté dans la revue Lightwave de mars 1991, un réseau optique à 32 stations fondé sur une architecture en étoile. L'introduction d'un filtre optique accordable permet de réduire le nombre de détecteurs. Le composant employé est un filtre FABRY-PEROT commandé par une câle de déplacement piézoélectrique. La gestion du réseau est obtenue par une scrutation périodique des différents canaux transmis sur le réseau.

Bien que donnant satisfaction à certains égards, ces réseaux optiques multicolores souffrent d'un inconvénient. En effet, dans l'état actuel de la technologie, ces réseaux sont tous du type à commutation de circuits (par opposition à la commutation de paquets). Or, ce type de commutation n'est pas adapté au partage d'un même support par plusieurs stations, ce qui rend difficile la gestion du réseau, et notamment l'établissement, la rupture et la surveillance des communications.

On connaît naturellement des réseaux fonctionnant en commutation de paquets. Les réseaux locaux d'entreprises fonctionnent généralement selon ce principe. Cela permet de partager temporellement le support physique entre tous les utilisateurs. Ce type de commutation offre une grande souplesse pour les échanges courants, mais voit son rendement diminuer en cas d'encombrement du réseau. Pour absorber des pointes de trafic occasionnelles et donc éviter une saturation du réseau, il est nécessaire d'augmenter la vitesse de travail. Mais alors le réseau fonctionne la plus grande partie du temps bien en dessous de sa capacité. De plus, la commutation utilisée implique un découpage des informations en paquets, ce qui oblige à ajouter à chaque paquet des indications supplémentaires, liées par exemple au routage. Cet ajout de données se traduit par un sur-débit, et donc par une diminution globale du rendement du réseau.

Ces réseaux à commutation de paquets utilisent le câble métallique ou la fibre optique. Mais, dans ce dernier cas, la fibre n'est introduite que comme support de transmission, et les possibilités des techniques optiques ne sont quasiment pas utilisées.

### Exposé de l'invention

La présente invention a justement pour but de remédier aux inconvénients respectifs de ces deux types de réseaux. A cette fin, elle propose un réseau de caractère composite en ce sens qu'il combine un réseau optique multicolore à commutation de circuits avec un réseau à commutation de paquets. Les transferts d'informations nécessitant un fort débit s'effectuent sur les différentes longueurs d'onde du réseau multicolore, en commutation de circuits. Deux stations désirant échanger une grande quantité d'informations conviennent d'une ou de deux longueurs d'onde (une pour chaque sens de transmission), afin d'établir entre elles deux liaisons croisées, et transmettre ainsi les informations. Ceci évite le sur-débit qu'impliquerait le découpage des informations à transmettre, si celles-ci étaient transmises sur le réseau en commutation de type paquets. Ce dernier réseau, en commutation de type paquets, peut être dimensionné pour un trafic moyen, sachant que les pointes de trafic seront absorbées par le réseau multicolore.

Les informations de gestion du réseau multicolore, et notamment celles qui sont utiles à l'établissement du lien optique entre deux stations, transitent en mode paquets sur le réseau à commutation de paquets.

L'invention s'applique à tous les types de réseaux multicolores dans lesquels des sélections dynamiques de longueurs d'onde sont possibles. La sélection de longueur d'onde peut se faire par accord d'un composant émetteur (par exemple un laser à semiconducteur), accord d'un filtre optique accordable ou de tout composant assurant la même fonction (par exemple un étalon FABRY-PEROT) ou par un oscillateur local (en détection cohérente).

De façon précise, l'invention a pour objet un réseau de télécommunications, comprenant un premier réseau de type optique multicolore à commutation de circuits et à sélection dynamique de longueur d'onde et des stations connectées à ce réseau, ce réseau étant caractérisé par le fait qu'il comprend un second réseau, de type à commutation de paquets, les stations étant également connectées à ce second réseau, les informations échangées entre les stations étant partagées entre le premier et le second réseaux, le premier étant utilisé pour les forts trafics, le second réseau transmettant également les informations de gestion nécessaires à l'établissement du lien optique entre les stations à travers le premier réseau.

### Brève description des dessins

- la figure 1 montre la structure générale d'un réseau selon l'invention ;
- la figure 2 illustre une variante où le réseau à commutation de paquets utilise un câble métallique comme support ;
- la figure 3 illustre une variante où le réseau à commutation de paquets utilise un réseau optique comme support ;
- les figures 4a et 4b illustrent deux variantes où les deux réseaux empruntent un même support optique ;
- la figure 5 est un schéma montrant deux groupes de longueurs d'onde affectées respectivement aux deux types de commutation ;
- la figure 6 montre un exemple de réalisation d'un réseau selon l'invention.

### Exposé détaillé de modes de réalisation

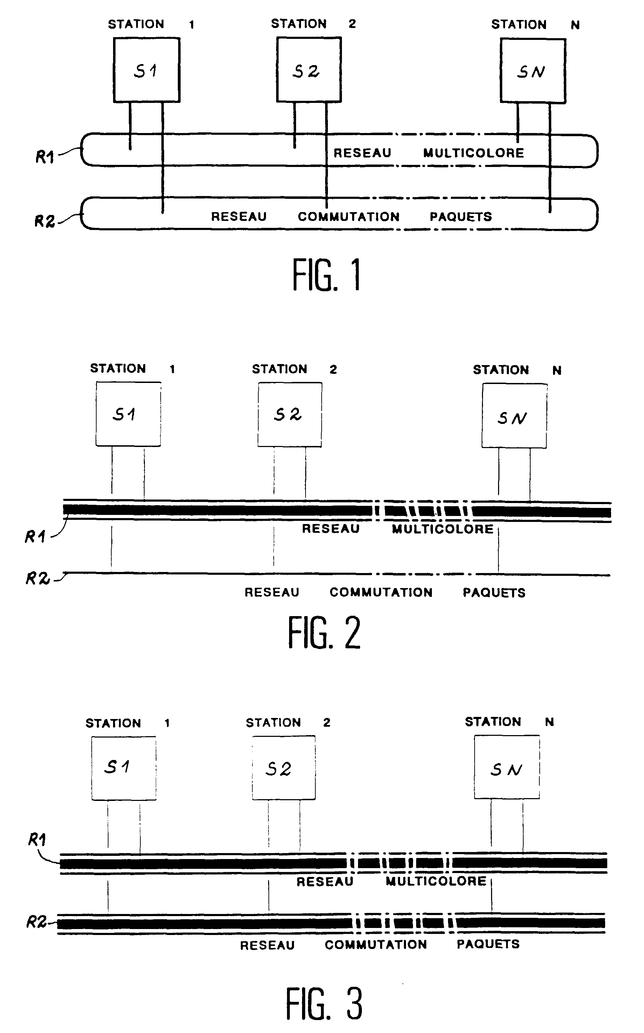

On voit sur la figure 1 un schéma général d'un réseau conforme à l'invention. Ce réseau comprend un premier réseau R1, du type optique multicolore à commutation de circuits et un second réseau R2, du type à commutation de paquets. A ces deux réseaux, sont connectées diverses stations S1, S2, ..., SN.

Sur la figure 2, est représentée une variante où le réseau R2 utilise un support qui est un câble métallique (symbolisé par un trait unique), alors que le réseau R1 utilise de son côté un support optique (symbolisé par un triple trait).

Sur la figure 3, le réseau R2 utilise lui aussi un support optique, comme le réseau R1.

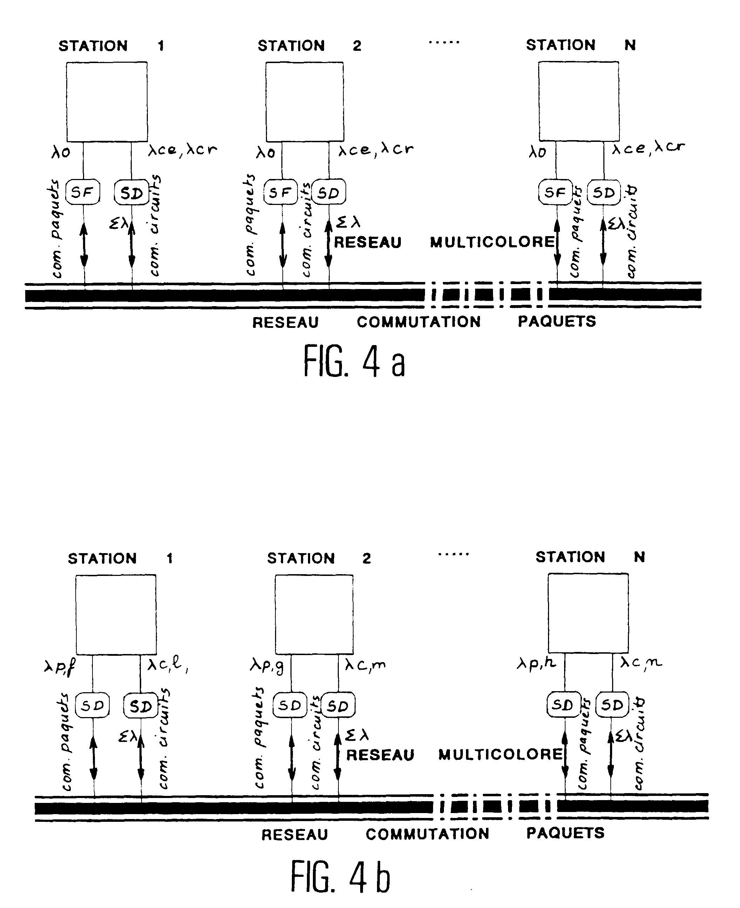

Sur les figures 4a et 4b, le même support optique (en pratique la même fibre optique) et utilisé à la fois pour le premier réseau et le second.

Dans la variante de la figure 4a, chaque station est associée à un module SD de sélection dynamique de longueur d'onde pour les transmissions en commutation de circuits et à un module SF de sélection fixe de longueur d'onde pour les transmissions en commutation de paquets. En commutation de circuits, les stations travaillent avec des longueurs d'onde λce (en émission) et λcr (en réception). Les couples de longueurs d'onde sont différents pour toutes les stations sauf pour des stations qui sont en communication entre elles, auquel cas la longueur d'onde d'émission de l'une est la longueur d'onde de réception de l'autre. En commutation de paquets, chaque station travaille sur une longueur d'onde λo.

La longueur d'onde utilisée pour le réseau à commutation de paquets peut être proche des longueurs d'onde utilisées par le réseau multicolore, et accessible par les éléments accordables de celui-ci. Cette configuration apporte une fiabilité accrue, puisque, en cas de défaillance des équipements optiques liés au réseau à commutation de paquets, il est possible d'accorder les équipements optiques liés au réseau multicolore sur la longueur d'onde utilisée pour le réseau à commutation de paquets, afin de prendre le relais pour assurer ce service minimum.

Dans la variante de la figure 4b, chaque station est associée à deux modules SD de sélection dynamique de longueur d'onde. En commutation de circuits, chaque station utilise une longueur d'onde λcl, ou λcm, ..., λcn où l, m, ..., n sont des indices allant de l à i.

En commutation de paquets, chaque station travaille avec la longueur d'onde λpf, ou λpg, ..., λph où f, g, ..., h sont encore des indices allant de l à j.

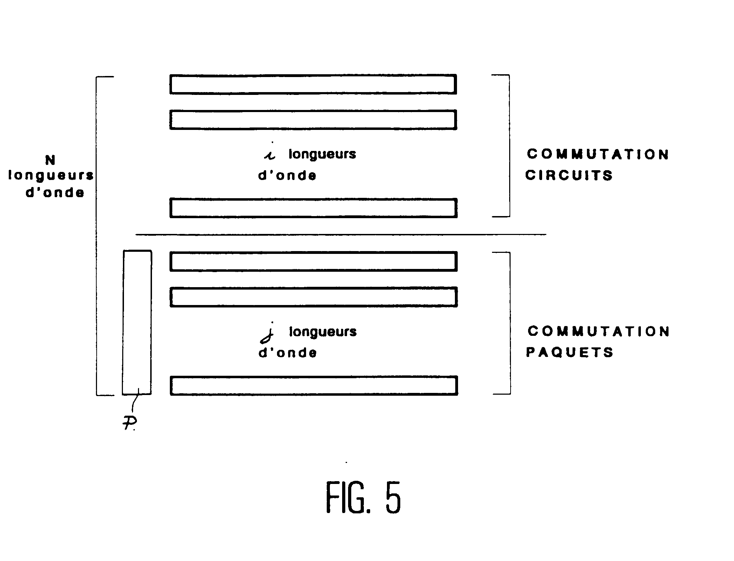

De manière plus générale, le réseau peut fonctionner sur une même fibre, avec N longueurs d'onde différentes utilisées comme illustré sur la figure 5 :
- i longueurs d'onde associées à autant de canaux utilisables en commutation de type circuits ;
- j longueurs d'onde associées à autant de réseaux superposés fonctionnant tous en commutation de type paquets.

La mise en place de j longueurs d'onde associées à des services à commutation de paquets permet, soit de répartir la charge du trafic correspondant sur ces différentes longueurs d'onde, soit d'associer chaque longueur d'onde à une catégorie de services particuliers au sein d'une entreprise par exemple, ou à une catégorie d'utilisateurs. Suivant les souhaits du gestionnaire du réseau, une station peut être équipée de manière à avoir accès à une, à plusieurs ou à toutes les longueurs d'onde. Des passerelles (P sur la figure 5) chargées de transférer du trafic d'une longueur d'onde vers une autre peuvent être introduites sur le réseau. Les j longueurs d'onde associées à une commutation de type circuits sont gérées de la même façon que dans les exemples des figures 2 à 4.

Pour les variantes des figures 2, 3, 4a et 4b, un seul élément accordable par station (émetteur ou récepteur) est nécessaire si l'on dispose du même nombre de longueurs d'onde utilisables que de stations connectées au réseau multicolore. Une longueur d'onde fixe et différente est alors assignée à chaque station, soit pour l'émission, soit pour la réception. Si le nombre de stations dépasse le nombre de longueurs d'onde disponibles, ces longueurs d'onde devront être partagées entre les stations. Elles seront alors attribuées en fonction des communications à établir. Ceci impose de mettre en oeuvre des éléments accordables tant à l'émission qu'à la réception. La variante de la figure 4 implique des éléments accordables à l'émission et à la réception. La variante de la figure 5 peut regrouper des stations possédant l'émission et/ou la réception accordable.

L'invention qui vient d'être décrite peut être utilisée dans de nombreux réseaux. On peut citer :
- tout réseau de données nécessitant une capacité de transmission importante ; les données à transmettre peuvent être sous forme numérique ou sous forme analogique (images par exemple) ; ces deux types d'informations peuvent coexister sur un même réseau à des longueurs d'onde différentes ; une application est par exemple un réseau professionnel de transmission d'images animées de haute qualité car entièrement optique ;
- tout réseau de données nécessitant la confidentialité des transmissions entre stations ; la possibilité d'isoler certaines stations sur des longueurs d'onde particulières, en utilisant toujours le même support physique, étant particulièrement intéressante ;
- les réseaux d'entreprise de type LAN (Local Area Network) ou MAN (Metropolitan Area Network) ; il est également possible de conserver un réseau de ce type déjà installé et arrivant à la limite de sa capacité, en lui superposant un réseau multicolore.

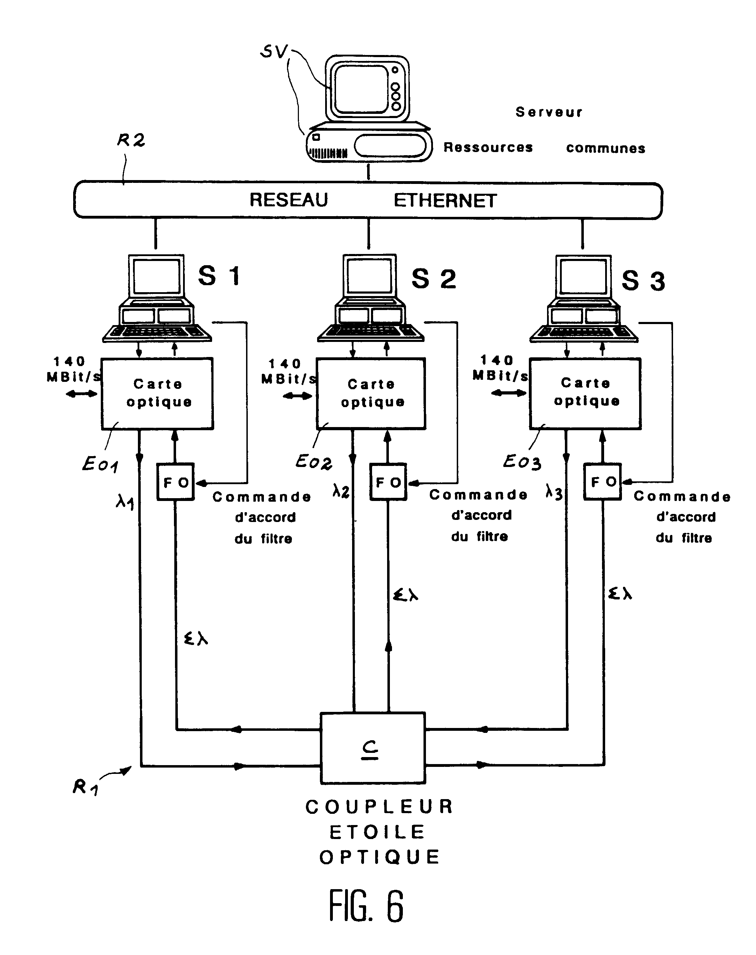

La figure 6 montre finalement un exemple de réalisation correspondant à une association d'un réseau multicolore de type commutation de circuits à un réseau de type commutation de paquets sur câble coaxial, en l'occurrence à un réseau ETHERNET (Marque déposée). Ce réseau, référencé R2, utilise un câble coaxial et fonctionne à 10 Mbit/s. Il est associé à un réseau optique R1 en étoile sur fibre monomode. Chaque station S1, S2, S3 est reliée, d'une part, au réseau ETHERNET, et d'autre part, au réseau optique par l'intermédiaire d'un équipement optique E01, E02, E03 travaillant à 140 Mbit/s. Chaque station possède un laser DFB émettant à une longueur d'onde fixe et, en réception, un filtre optique accordable permettant de sélectionner une longueur d'onde particulière. Ce filtre accordable, utilisant un réseau monté sur une structure déformable à cale piézoélectrique, présente une largeur spectrale de 3 nm à -3 dB, pour une perte d'insertion de 3 dB. Le domaine d'accord est de 60 nm, de 1500 à 1560 nm. Le coeur du réseau optique est le coupleur étoile passif C. Le budget optique est de 22 dB, ce qui permet d'augmenter dans une large mesure le nombre de stations ainsi que la distance séparant celles-ci.

L'établissement et la rupture de communication, ainsi que la surveillance du réseau, se font à partir des terminaux associés à chaque station, ceux-ci dialoguant entre eux et avec un serveur SV par l'intermédiaire du réseau ETHERNET.

## Revendications

1. Réseau de télécommunications, comprenant un premier réseau (R1) de type optique multicolore à commutation de circuits et à sélection dynamique de longueur d'onde et des stations (S1, S2, ..., SN) connectées à ce réseau (R1), caractérisé par le fait qu'il comprend un second réseau (R2), de type à commutation de paquets, les stations (S1, S2, ..., SN) étant également connectées à ce second réseau (R2), les informations échangées entre les stations étant partagées entre le premier et le second réseaux (R1, R2), le premier (R1) étant utilisé pour les forts trafics, le second réseau (R2) transmettant également les informations de gestion nécessaires à l'établissement du lien optique entre les stations (S1, S2, ..., SN) à travers le premier réseau (R1).

2. Réseau selon la revendication 1, caractérisé par le fait que le second réseau (R2) utilise un support de transmission qui est une ligne électrique.

3. Réseau selon la revendication 2, caractérisé par le fait que le support de transmission du second réseau (R2) est un câble coaxial.

4. Réseau selon la revendication 1, caractérisé par le fait que le support de transmission du second réseau (R2) est une fibre optique.

5. Réseau selon la revendication 1, caractérisé par le fait que le premier réseau (R1) et le second réseau (R2) de transmission utilisent une même fibre optique comme support de transmission.

6. Réseau selon la revendication 5, caractérisé par le fait qu'il fonctionne sur un ensemble de N longueurs d'onde, le nombre N se répartissant en i longueurs d'onde affectées à autant de canaux constituant le premier réseau (R1) à commutation de circuits et en j longueurs d'onde affectées à autant de canaux constituant le second réseau (R2) à commutation de paquets.

7. Réseau selon la revendication 6, caractérisé par le fait que les j canaux à commutation de paquets se répartissent la charge du trafic affecté au second réseau (R2).

8. Réseau selon la revendication 7, caractérisé par le fait que des passerelles (P) permettent de dérouter le trafic d'une longueur d'onde à une autre.

9. Réseau selon la revendication 6, caractérisé par le fait que les j canaux à commutation de paquets sont chacun affectés à une catégorie de services particuliers.

## Patentansprüche

1. Fernmeldenetz, ein erstes Netz (R1) des optischen Multiwellenlängentyps bzw. Multimodetyps mit Durchschalte-Vermittlungstechnik und dynamischer Wellenlängenselektion und an dieses Netz (R1) angeschlossene Stationen (S1, S2, ..., SN) umfassend,
**dadurch gekennzeichnet,**
daß es ein zweites Netz (R2) des Paketvermittlungstyps umfaßt, wobei die Stationen (S1, S2, ..., SN) auch an dieses zweite Netz (R2) angeschlossen sind, wobei die zwischen den Stationen ausgetauschten Daten zwischen dem ersten und dem zweiten Netz (R1, R2) verteilt werden und das erste (R1) für die starken Verkehre benutzt wird und das zweite auch die Verwaltungsdaten überträgt, die zur Herstellung der optischen Verbindung zwischen den Stationen (S1, S2, ..., SN) über das erste Netz (R1) notwendig sind.

2. Netz nach Anspruch 1, dadurch gekennzeichnet, daß das zweite Netz (R2) einen Übertragungsträger benutzt, der eine elektrische Leitung ist.

3. Netz nach Anspruch 2, dadurch gekennzeichnet, daß der Übertragungsträger des zweiten Netzes (R2) ein Koaxialkabel ist.

4. Netz nach Anspruch 1, dadurch gekennzeichnet, daß der Übertragungsträger des zweiten Netzes (R2) eine optische Faser ist.

5. Netz nach Anspruch 1, dadurch gekennzeichnet, daß das erste Netz (R1) und das zweite Netz (R2) als Übertragungsträger ein und dieselbe optische Faser benutzen.

6. Netz nach Anspruch 5, dadurch gekennzeichnet, daß es mit insgesamt N Wellenlängen funktioniert, wobei die Zahl N sich unterteilt in i Wellenlängen, ebensovielen das erste Netz (R1) mit Durchschalte-Vermittlungstechnik bildenden Kanälen zugeteilt, und in j Wellenlängen, ebensovielen das zweite Netz (R2) mit Paketvermittlung bildenden Kanälen zugeteilt.

7. Netz nach Anspruch 6, dadurch gekennzeichnet, daß die j Paketvermittlungskanäle sich die dem zweiten Netz (R2) zugeteilte Verkehrsbelastung teilen.

8. Netz nach Anspruch 7, dadurch gekennzeichnet, daß Übergänge (P) ermöglichen, den Verkehr von einer Wellenlänge zu einer anderen umzuleiten.

9. Netz nach Anspruch 6, dadurch gekennzeichnet, daß jeder der j Paketvermittlungskanäle einer Sonderdienstekategorie zugeteilt ist.

## Claims

1. Telecommunications network, comprising a first multicoloured, optical network (R1) with circuit switching and dynamic wavelength selection and stations (S1, S2, ... SN) connected to said network (R1), characterized in that it comprises a second network (R2), of the packet switching type, the stations (S1, S2, ... SN) also being connected to said second network (R2), the informations exchanged between the stations being shared between the first and second networks (R1, R2), the first (R1) being used for heavy traffic, the second (R2) network also transmitting the control informations necessary for establishing the optical link between the stations (S1, S2, ... SN) across the first network (R1).

2. Network according to claim 1, characterized in that the second network (R2) uses a transmission support in the form of an electric line.

3. Network according to claim 2, characterized in that the transmission support of the second network (R2) is a coaxial cable.

4. Network according to claim 1, characterized in that the transmission support of the second network (R2) is an optical fibre.

5. Network according to claim 1, characterized in that the first network (R1) and the second transmission network (R2) use the same optical fibre as the transmission support.

6. Network according to claim 5, characterized in that it functions on a plurality of wavelengths N, the number N being subdivided into i wavelengths allocated to the same number of channels constituting the first circuit switching network (R1) and j wavelengths allocated to the same number of channels constituting the second packet switching network (R2).

7. Network according to claim 6, characterized in that the j packet switching channels share out the traffic load allocated to the second network (R2).

8. Network according to claim 7, characterized in that bridges (P) make it possible to reroute traffic from one wavelength to another.

9. Network according to claim 6, characterized in that the j packet switching channels are in each case allocated to a particular category of services.
